# EUROPÄISCHE PATENTSCHRIFT

(11) **EP 4 067 232 B1**
(45) Veröffentlichungstag und Bekanntmachung des Hinweises auf die Patenterteilung: **31.12.2025**
(21) Anmeldenummer: 22161818.4
(22) Anmeldetag: 14.03.2022
(51) Int. Cl.: B64D 11/00

(54) **BEFESTIGUNGSSYSTEM UND BEFESTIGUNGSVERFAHREN ZUM BEFESTIGEN EINER KOMPONENTE IN EINER KABINE**
FIXING SYSTEM AND METHOD FOR FIXING A COMPONENT IN A CABIN
SYSTÈME DE FIXATION ET PROCÉDÉ DE FIXATION PERMETTANT DE FIXER UN COMPOSANT DANS UNE CABINE

(30) Priorität: 30.03.2021 DE 102021108000
(43) Veröffentlichungstag der Anmeldung: 05.10.2022
(73) Patentinhaber: Airbus Operations GmbH, 21129 Hamburg (DE)
(72) Erfinder: Benthien, Hermann, 21129 Hamburg (DE); Weigand, Maximilian, 21129 Hamburg (DE); Poppe, Andreas, 21129 Hamburg (DE)

(56) Entgegenhaltungen:
- DE-A1- 102005 054 890
- US-A1- 2018 319 478
- US-A1- 2019 308 714
- US-A1- 2021 031 922

## Beschreibung

### TECHNISCHES GEBIET

Die Erfindung betrifft ein Befestigungssystem zum Befestigen einer Komponente in einer Kabine, welche in einer Struktur eines Verkehrsmittels ausgebildet ist, eine Kabine eines Verkehrsmittels, ein Verfahren zum Befestigen einer Komponente in einer Kabine eines Verkehrsmittels sowie ein Verkehrsmittel.

### HINTERGRUND DER ERFINDUNG

Zum Anbinden von Einbauelementen in Fahrzeugen werden üblicherweise verschiedene Halter, Verbinder und Vorrichtungen eingesetzt werden. Ihre Ausgestaltung hängt von der Beschaffenheit, der Größe, des Gewichts und der Einbauposition der betreffenden Einbauelemente ab. Sitze und andere Einrichtungen werden oftmals an bodenseitigen Befestigungsschienen befestigt. Einbauelemente an einer Decke einer Fahrzeugkabine könnten durch fachwerkartige Rahmenkonstruktionen befestigt werden.

In DE 19839701 C2 wird eine Gepäckablageanordnung gezeigt. DE 19633469 C1 zeigt eine Vorrichtung zum Halten von Gepäckablagen in Flugzeugkabinen, bei denen u. a. Seile und Bänder zum Halten eingesetzt werden. Bei bekannten Einrichtungen kann aufwändig sein, bauteilbedingte und fertigungsbedingte Toleranzen bei der Anbindung der Einbauelemente auszugleichen.

Die US 2021/0031922 A1 offenbart eine Befestigungsplattform, die mit Verbindungsstangen fester Länge an einer Primärstruktur eines Flugzeugs befestigbar ist. Diese Plattform dient als Befestigungsmöglichkeiten für Komponenten oder Monument, die in der Kabine des Flugzeuges angeordnet werden.

Die US 2018/0319478A1 offenbart ein Verfahren zum Installieren von Modulen in einem Flugzeug unter Anwendung einer Längenanpassung von Verbindungsstangen.

Die 2019/0308714A1 offenbart eine Fachwerkstruktur mit Zuggliedern, die Lasten nur in Zugrichtung ableiten, sich aber verformen bei entgegenwirkenden Lasten.

Die DE102005054890A1 offenbart eine Befestigungsstruktur zur Befestigung von Komponenten in einer Flugzeugkabine. Die Befestigungsstruktur umfasst einen in Längsrichtung der Kabine ausgerichteten Systemträger mit entsprechenden Befestigungsmitteln zum Befestigen der Komponenten.

### ZUSAMMENFASSUNG DER ERFINDUNG

Es ist eine Aufgabe der Erfindung, ein Befestigungssystem zum Befestigen einer Komponente in einer Kabine eines Verkehrsmittels vorzuschlagen, das in der Lage ist, eine einfache Montage und einen einfachen Toleranzausgleich zu ermöglichen.

Die Aufgabe wird gelöst durch ein Befestigungssystem mit den Merkmalen des unabhängigen Anspruchs 1. Vorteilhafte Ausführungsformen und Weiterbildungen sind den Unteransprüchen der nachfolgenden Beschreibung zu entnehmen.

Es wird ein Befestigungssystem zum Befestigen einer Komponente in einer Kabine vorgeschlagen, welche in einer Struktur eines Verkehrsmittels ausgebildet ist, aufweisend mindestens einen ersten Längsträger zur Anordnung in einer Längsrichtung der Kabine, mindestens zwei Paare zweier Tragelemente, und mehrere Strukturverbinder, wobei die Paare der Tragelemente derart mit dem mindestens einen ersten Längsträger und der Struktur verbindbar sind, dass sie im Wesentlichen dreiecksförmig zwischen dem mindestens einen ersten Längsträger und der Struktur verlaufen, wobei dabei zwei Enden der Tragelemente jedes Paars voneinander beabstandet sind und die Tragelemente von diesen Enden aus zusammenlaufen, wobei der mindestens eine erste Längsträger mindestens eine Befestigungselement zum Verbinden jeweils eines Tragelements mit dem mindestens einen ersten Längsträger aufweist, wobei die Tragelemente jedes Paars mittels mindestens eines der Strukturverbinder mit der Struktur verbindbar sind. Die Tragelemente des jeweiligen Paares verlaufen derart zwischen dem mindestens einen ersten Längsträger und der Struktur, dass sich eine Dreiecksform von einem oder zwei Strukturverbindern zu zwei bzw. einem Befestigungselement erstreckt. Das mindestens eine Befestigungselement an dem mindestens einen ersten Längsträger ist an einer justierbaren Befestigungsposition angeordnet, sodass das betreffende Paar zweier Tragelemente eine justierbare Dreiecksform einnehmen kann, um einen zwischen dem betreffenden Längsträger und der Struktur gebildeten, toleranzbehafteten Zwischenraum zu überbrücken.

Das erfindungsgemäße Befestigungssystem stellt eine Tragwerksstruktur bereit, die das Anbinden einer zu befestigenden Komponente erlaubt. Eine Basis bildet der mindestens eine erste Längsträger, der sich als ein längliches Bauteil parallel zu einer Längsrichtung der Kabine bzw. einer Längsrichtung des Verkehrsmittels erstreckt. Der erste Längsträger kann einen runden oder eckigen Querschnitt aufweisen und massiv oder hohl ausgeführt sein. Es bietet sich an, zur Realisierung des ersten Längsträgers ein metallisches Material vorzusehen, welches dazu geeignet ist, an mehreren Abschnitten entlang seiner Haupterstreckungsachse befestigt zu werden und die zu erwartenden Lasten aufzunehmen. Die Lasten hängen von der betreffenden Komponente ab. Wird das Befestigungssystem zum Anbinden von Über-Kopf-Staufächern in einer Kabine eines Flugzeugs vorgesehen, können beträchtliche Lasten hieran entstehen. Die zulassungsrelevanten Kriterien sind dabei zu berücksichtigen, beispielsweise anzunehmende Lastvielfache.

Der mindestens eine erste Längsträger könnte auch eine Anordnung von mehreren ersten Längsträgern umfassen, die aneinander gereiht werden. Somit könnte eine durchgehende Struktur mehrerer erster Längsträger realisiert werden, die sich im Wesentlichen über die gesamte Kabinenlänge oder einen zusammenhängenden Kabinenabschnitt erstreckt. Die ersten Längsträger könnten stirnseitig miteinander verbunden sein oder gegebenenfalls Lücken zueinander einschließen.

Das Befestigungselement ist dazu vorgesehen, mit dem ersten Längsträger verbunden zu werden. An dem Befestigungselement ist ein Ende eines Tragelements befestigbar. Die Strukturverbinder erlauben indes das Befestigen eines Endes eines Tragelements an der Struktur. Sie sind folglich mit der Struktur fest verbindbar und erlauben die Aufnahme eines Endes des Tragelements. Besonders vorteilhafte Ausführungsformen von Strukturverbindern werden weiter nachfolgend dargestellt.

Zum Erzielen einer justierbaren Dreiecksform können unterschiedliche Vorgehensweisen miteinander kombiniert werden. Durch eine Längenvariabilität und durch eine justierbare Befestigungsposition eines Befestigungselements können Toleranzen zwischen dem ersten Längsträger und der Struktur sehr gut ausgeglichen werden. Die Dreiecksform kann sich hierdurch leicht anpassen lassen, sodass der Zwischenraum zwischen dem ersten Längsträger und der Struktur genau durch das betreffende Dreieck aus zwei Tragelementen überbrückt wird. Das Dreieck erstreckt sich folglich von einem oder zwei Strukturverbindern zu zwei oder einem Befestigungselement. Dabei ist es ohne weiteres möglich, bei einem im Raum ausgerichteten ersten Längsträger durch Anpassen der Länge eines der Tragelemente und durch Anpassen der Befestigungsposition eines Befestigungselements an dem ersten Längsträger die von dem ersten Längsträger aus gemessene Höhe des durch das Paar Tragelemente gebildeten Dreiecks anzupassen, um die Toleranz zu berücksichtigen.

In einer besonders vorteilhaften Ausführungsform spannen die mindestens zwei Paare zweier Tragelemente jeweils eine Tragebene auf, wobei ein Winkel zwischen der Tragebene eines ersten Paares und eines zweiten Paares mindestens 45° beträgt. Durch das Ausbilden zweier schräg zueinander verlaufender Tragebenen wird eine räumliche Befestigung des ersten Längsträgers ermöglicht und die Abstützung des ersten Längsträgers erfolgt in allen drei Raumrichtungen. Eine Schnittlinie der beiden Tragebenen könnte etwa mit einer Haupterstreckungsrichtung des ersten Längsträgers zusammenfallen oder zumindest parallel hierzu verlaufen. Die durch das erste Paar aufgespannte Tragebene wird weiter nachfolgend erste Tragebene genannt. Die durch das zweite Paar aufgespannte Tragebene analog dazu zweite Tragebene.

Bevorzugt ist mindestens ein erster Komponentenhalter vorgesehen, der mit dem mindestens einen ersten Längsträger und der zu befestigenden Komponente verbindbar ist. Der erste Komponentenhalter könnte beispielhaft eine Aussparung oder eine Ausnehmung aufweisen, die mit einem Querschnitt des ersten Längsträgers korrespondiert. Der erste Komponentenhalter könnte an einer weitgehend beliebigen Längsposition des ersten Längsträger positioniert und befestigt werden, um an dieser Stelle eine Verbindung zu der zu befestigenden Komponente einzunehmen.

In einer besonders vorteilhaften Ausführungsform weist das Befestigungssystem ferner mindestens einen zweiten Längsträger auf, der parallel zu dem ersten Längsträger positionierbar ist, ferner aufweisend ein drittes Paar zweier Tragelemente, die im Wesentlichen dreiecksförmig zwischen dem mindestens einen zweiten Längsträger und der Struktur verlaufen. Damit wird der Abstand des mindestens einen zweiten Längsträgers in zumindest einer Ebene festgelegt. Die Paare der Tragelemente sind hier analog zu den vorher genannten Paaren von Tragelementen ausgestaltbar. Es kann sich anbieten, dass das dritte Paar oder die dritten Paare sich direkt an ein zweite Paar oder zweite Paare von Tragelementen anschließen. Das zweite Paar oder die zweiten Paare können indes direkt auf ein erstes Paar oder erste Paare folgen. Sämtliche vorangehenden und nachfolgenden Ausführungen zu den ersten Längsträgern sowie daran befestigten Elementen gelten auch für die zweiten Längsträger.

In einer vorteilhaften Ausführungsform spannt das dritte Paar von Tragelementen eine dritte Tragebene auf, die einen Winkel mit der Tragebene des zweiten Paares von mindestens 45° einschließt. Folglich werden auch hier zwei sich schneidende Tragebenen geschaffen, die zu einer Bildung eines Teils eines räumlichen Fachwerks genutzt werden.

Der mindestens eine zweite Längsträger könnte in vorteilhafter Weise über mit der Struktur verbindbare Halter schwenkbar an der Struktur positionierbar sein, sodass er in eine von der zu befestigenden Komponente beabstandete Position und in eine zu der zu befestigenden Komponente gewandte Position bringbar ist, das Befestigungssystem ferner aufweisend zweite Komponentenhalter, die mit dem mindestens einen zweiten Längsträger und der zu befestigenden Komponente verbindbar sind. Der zweite Komponentenhalter kann analog zu dem ersten Komponentenhalter gestaltet sein. Bevorzugt sind der erste Komponentenhalter und der zweite Komponentenhalter an voneinander beabstandeten Bereichen der Komponente angeordnet, sodass diese von dem ersten Längsträger und dem zweiten Längsträger gehalten werden kann. Nach dem Positionieren des zweiten Längsträgers im Raum können die an der Struktur befestigten Halter zu dem zweiten Längsträger geschwenkt und dort befestigt werden. Es ist dann besonders vorteilhaft, wenn die Halter eine einstellbare Länge aufweisen, um dort einen Toleranzausgleich zwischen dem zweiten Längsträger und der Struktur zu schaffen. Es ist weiterhin denkbar, dass auch die Halter als dreiecksförmige Struktur eines Paars zweier Tragelemente ausgeführt werden. Es ist weiterhin sinnvoll, entlang der Haupterstreckungsrichtung des mindestens einen zweiten Längsträgers mehrere Halter anzuordnen, die äquidistant entlang der Haupterstreckungsrichtung verteilt sind.

In einer vorteilhaften Ausführungsform weist jedes Paar von Tragelementen ein Tragelement mit einer justierbaren Länge und ein Tragelement mit einer festen Länge auf. Damit kann eines der Tragelemente mit einer starren Struktur realisiert sein, um die Herstellkosten sowie die Montagedauer zu senken.

Es ist vorteilhaft, wenn das Tragelement mit der festen Länge an einem Befestigungselement an dem betreffenden Längsträger an einer justierbaren Befestigungsposition angeordnet ist. Die justierbare Befestigungsposition kann sich durch einen positionsvariablen Eingriff mit dem betreffenden Längsträger ergeben oder durch einen Verbinder, der durch seine Bauart, etwa über eine Verzahnung oder Gewinde, eine Einstellbarkeit eines Anbindungspunkts für quer zu dem betreffenden (ersten oder zweiten) Längsträger angeordnete Tragelemente erlaubt.

Der mindestens eine erste Längsträger kann weiterhin mehrere erste Längsträger aufweisen, die stirnseitig durch einen Gelenkverbinder verbunden sind, wobei der Gelenkverbinder das Befestigungselement aufweist und dazu ausgebildet ist, durch eine lösbare Verzahnung eine variable, festlegbare Position an zueinander gewandten Stirnseiten der ersten Längsträger einzunehmen. Die Verzahnung kann mit einem Element hergestellt werden, welches mit einem der Längsträger in Verbindung steht. Die Verzahnung ist dabei so ausgeführt, dass ein positionsvariabler Eingriff herstellbar ist, d.h. ein Element wird mit einem anderen Element in einer gewünschten Position ausgerichtet, um anschließend eine Verzahnung, d.h. einen Eingriff zweier miteinander korrespondierender verzahnter Bereiche, etwa Rillen, herzustellen.

Die Erfindung betrifft ferner eine Kabine eines Verkehrsmittels, aufweisend mindestens ein Befestigungssystem gemäß der vorhergehenden Beschreibung, sowie mindestens eine daran angeordnete Komponente.

Die Erfindung betrifft weiterhin ein Verkehrsmittel, aufweisend eine derartige Kabine.

In einer besonders vorteilhaften Ausführungsform ist das Verkehrsmittel ein Verkehrsflugzeug mit einem Rumpf, in dem die Kabine angeordnet ist.

Die Erfindung betrifft weiterhin ein Befestigungsverfahren zum Befestigen einer Komponente in einer Kabine, welche in einer Struktur eines Verkehrsmittels ausgebildet ist, aufweisend das Anordnen mindestens eines ersten Längsträgers in einer Längsrichtung der Kabine, das Anordnen mindestens zweier Paare zweier Tragelemente in einem Zwischenraum zwischen der Struktur und dem mindestens einen ersten Längsträger jeweils in einer Dreiecksform. Der erste Längsträger weist mindestens ein erstes Befestigungselement zum Verbinden jeweils mindestens eines Tragelementes mit dem mindestens einen ersten Längsträger auf. Die Dreiecksform wird durch Justieren der Befestigungsposition mindestens eines Befestigungselements an dem mindestens einen ersten Längsträger angepasst, um den zwischen dem betreffenden Längsträger und der Struktur gebildeten, toleranzbehafteten Zwischenraum genau zu überbrücken, und das Befestigen der Paare der Tragelemente an Strukturverbindern und dem mindestens einen ersten Längsträger. Dabei erstreckt sich die jeweilige Dreiecksform von einem oder zwei Strukturverbindern zu zwei bzw. einem ersten Befestigungselement des mindestens einen ersten Längsträgers.

Das Befestigungsverfahren kann in einer vorteilhaften Ausführungsform ferner das Anordnen mindestens eines zweiten Längsträgers in einer Längsrichtung der Kabine in einem Abstand zu dem mindestens einen zweiten Längsträger, das Anordnen mindestens eines dritten Paars zweier Tragelemente in einem Zwischenraum zwischen der Struktur und dem mindestens einen zweiten Längsträger jeweils in einer Dreiecksform, das Anpassen der Dreiecksform durch Justieren einer Länge mindestens eines der Tragelemente des dritten Paars und/oder der Befestigungsposition mindestens eines Befestigungselements an dem mindestens einen zweiten Längsträger, um den zwischen dem betreffenden Längsträger und der Struktur gebildeten, toleranzbehafteten Zwischenraum genau zu überbrücken, und das Befestigen des dritten Paars der Tragelemente an Strukturverbindern und dem mindestens einen zweiten Längsträger aufweisen.

In einer bevorzugten Ausführungsform weist das Befestigungsverfahren ferner das schwenkbare Anordnen von Haltern an der Struktur als vorbereitenden Schritt, das Anbinden des mindestens einen zweiten Längsträgers an den Haltern, das Befestigen der Komponente an dem mindestens einen ersten Längsträger, das Ausrichten der Komponente, das Verschwenken der Halter, sodass der mindestens eine zweite Längsträger an der Komponente ausgerichtet ist, das Verbinden der Komponente mit dem mindestens einen zweiten Längsträger, und das Befestigen des dritten Paars der Tragelemente an Strukturverbindern und dem mindestens einen zweiten Längsträger auf.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 zeigt eine Seitenansicht einer Komponente, die mittels eines Befestigungssystems in einer Kabine befestigt ist.
Fig. 2 zeigt eine Draufsicht auf einen Teil des Befestigungssystems während einer Fixierung an der Struktur.
Fig. 3 zeigt zwei Komponenten mit daran angeordneten Komponentenhaltern.
Fig. 4 zeigt einen Komponentenhalter, der mit dem ersten Längsträger verbunden ist.
Fig. 5 zeigt den Vorgang des Befestigens der Komponente an dem zweiten Längsträger.
Fig. 6a bis 6c zeigen Details eines Gelenkverbinders in unterschiedlichen Darstellungen.
Fig. 7a und 7b zeigen einen Strukturverbinder in zwei unterschiedlichen Darstellungen.
Fig. 8 zeigt ein Flugzeug, das eine Kabine und ein darin ausgebildetes Befestigungssystem besitzt.

### DETAILLIERTE DARSTELLUNG EXEMPLARISCHER

### AUSFÜHRUNGSFORMEN

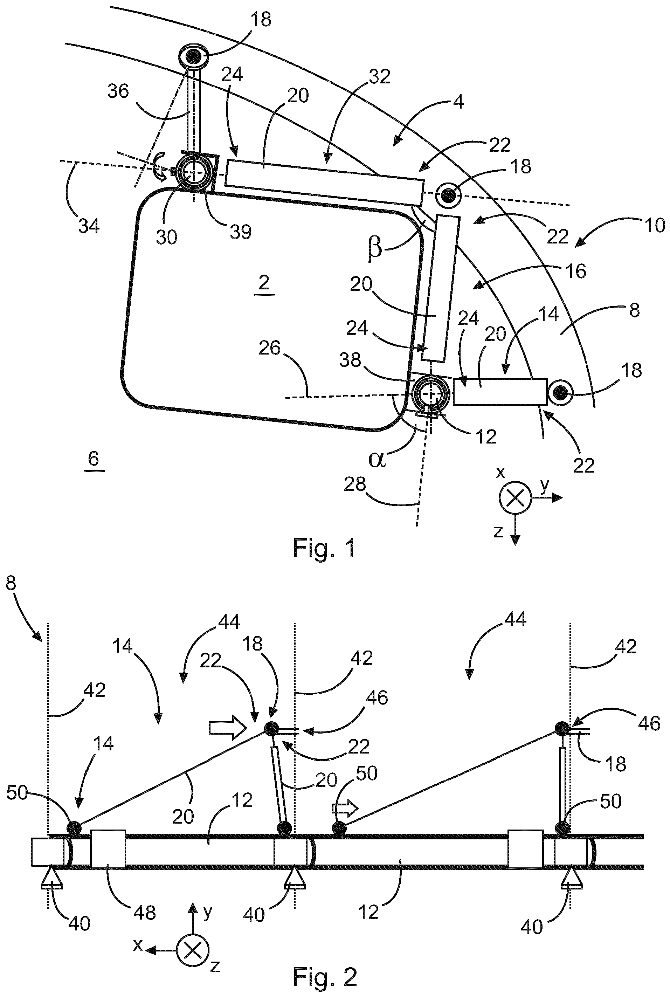

Fig. 1 zeigt eine Komponente 2 in Form eines Über-Kopf-Staufachs, das mithilfe eines Befestigungssystems 4 in einer Kabine 6, welche in einer Struktur 8 eines Flugzeugs 10 ausgebildet ist, befestigt ist. Das Befestigungssystem 4 weist in dieser Darstellung einen ersten Längsträger 12 auf, der beispielhaft als Rohr mit kreisförmigem, hohlen Querschnitt ausgeführt ist. Der erste Längsträger 12 ist parallel zu einer Längsachse x des Flugzeugs 10 ausgerichtet. Zum Ausrichten des ersten Längsträgers 12 wird ein Montagegestell (nicht gezeigt) verwendet, das bei der Montage des Befestigungssystems 4 den ersten Längsträger 12 hält. Die Struktur 8 des Flugzeugs 10 ist in ihren Abmessungen toleranzbehaftet. Ein Zwischenraum zwischen dem ausgerichteten Längsträger 12 und der Struktur 8 ist folglich ebenso toleranzbehaftet. Bei der Montage des ersten Längsträgers 12 in seiner ausgerichteten Position müssen folglich entlang seines Verlaufs stets unterschiedliche Abstände zu Befestigungspunkten an der Struktur 8 berücksichtigt werden.

Hierzu ist der erste Längsträger 12 in dieser Darstellung mit einem ersten Paar 14 und einem zweiten Paar 16 von Tragelementen 20 an Strukturverbindern 18 angeordnet. Die Strukturverbinder 18 werden weiter nachfolgend anhand einer möglichen Ausführungsform erläutert. Sie sind mit Befestigungspunkten, beispielsweise Bohrungen, der Struktur 8 verbunden und halten äußere Enden 22 der Tragelemente 20.

Eine Besonderheit dieses Aufbaus liegt unter anderem darin, dass die beiden Paare 14 und 16 von Tragelementen 20 eine Dreiecksform einnehmen. Dies bedeutet, dass sie jeweils zwei Tragelemente 20 aufweisen, welche dreiecksförmig zueinander angeordnet sind. Dabei können die äußeren Enden 22 der beiden Tragelemente 20 voneinander beanstandet sein und die Tragelemente 20 von den äußeren Enden 22 zu inneren Enden 24 zusammenlaufen. Umgekehrt könnten jedoch auch die äußeren Enden 22 direkt aneinander angrenzen oder zusammenfallen und die Tragelemente 20 zu den inneren Enden 24 hin auseinanderlaufen. Die Dreiecksform ist dabei justierbar. Dies wird weiter nachfolgend in Fig. 2 dargestellt. Durch die justierbare Dreiecksform kann bei der Befestigung des ersten Längsträgers 12 zum Anbinden der Tragelemente 20 an die Strukturverbinder 18 unmittelbar die Dreiecksform so angepasst werden, dass der toleranzbehaftete Zwischenraum zwischen dem ersten Längsträger 12 und den Strukturverbindern 18 genau überbrückt wird. Ist dies erfolgt, kann der erste Längsträger 12 von dem Montagegestell gelöst werden und behält seine vorgegebene Ausrichtung.

Die Strukturverbinder 18 sind derart an der Struktur 8 angeordnet, dass die beiden Paare 14 und 16 jeweils eine Tragebene 26 und 28 aufspannen, welche beispielhaft einen Winkel α von etwa 80° zueinander einschließen. Ein zweiter Längsträger 30 ist vorgesehen, der in einem Abstand zu dem ersten Längsträger 12 angeordnet ist. Der zweite Längsträger 30 verläuft ebenfalls parallel zu der Längsachse x des Flugzeugs 10 und somit auch parallel zu dem ersten Längsträger 12. Ein drittes Paar 32 von Tragelementen 20 ist vorgesehen, das sich von dem zweiten Längsträger 30 zu den Strukturverbindern 18 erstreckt, die auch mit dem zweiten Paar 16 in Verbindung stehen. Die Tragelemente 20 des dritten Paares 32 spannen analog zu den anderen Paaren 14 und 16 eine dritte Tragebene 34 auf, die mit der zweiten Tragebene 28 einen Winkel β von ungefähr 90° einschließt.

Zum Befestigen des zweiten Längsträgers 30 ist ein Halter 36 vorgesehen, der schwenkbar an der Struktur 8 angeordnet ist. Dort ist er mit einem Strukturverbinder 18 verbunden und dazu ausgebildet, um den betreffenden Strukturverbinder 18 um eine parallel zu der Längsachse x des Flugzeugs 10 verlaufende Achse geschwenkt zu werden.

Die Komponente 2 ist indes über Komponentenhalter 38 mit den Längsträgern 12 und 30 verbunden, die nach ihrer Befestigung an der Struktur 8 eine starre, fachwerkartige Struktur darstellen. Die Komponentenhalter 38 werden weiter nachfolgend dargestellt. Sie erlauben eine automatische Ausrichtung und Zentrierung an den Längsträgern 12 und 30. Zur Befestigung der Komponente 2 könnten etwa zunächst erste Komponentenhalter 38, die an der Komponente 2 befestigt sind, in den ersten Längsträger 12 eingehängt oder eingehakt werden. Nach Ausrichtung der Komponente 2 kann der zweite Längsträger 30 zu zweiten Komponentenhaltern 39 an dem diametral gegenüberliegenden Ende des Komponente 2 geschwenkt und dort über das dritte Paar 32 von Tragelementen 20 befestigt werden.

In Fig. 2 wird der Vorgang des Befestigens des ersten Längsträger 12 in einer Draufsicht auf die x-y-Ebene gezeigt. Hier ist ein Montagegestell 40 angedeutet, das den ersten Längsträger 12 in einer vorgegebenen Lage hält. Die Struktur 8 umfasst mehrere Spante 42, wobei benachbarte Spante 42 jeweils ein Spantfeld 44 zwischen sich einschließen. Jedem Spantfeld 44 ist beispielhaft ein erstes Paar 14, ein zweites Paar 16 und ein drittes Paar 32 von Tragelementen 20 zugeordnet. In dieser Ansicht wird der besseren Übersicht halber nur das erste Paar 14 gezeigt.

Hier sind die äußeren Enden 22 beider Tragelemente 20 an einem gemeinsamen Strukturverbinder 18 angeordnet. Der Strukturverbinder 18 wird hier in einer Bohrung 46 eines Spants 42 eingesteckt. Ein diagonal verlaufendes Tragelement 20 ist mit seinem inneren Ende 24 an einer justierbaren Befestigungsposition an dem ersten Längsträger 12 befestigbar. Das quer zu dem ersten Längsträger 12 verlaufende Tragelement 20 weist indes eine justierbare Länge auf. Beim Einstecken des Strukturhalters 18 kann folglich mit festgelegtem ersten Längsträger 12 die Dreiecksform angepasst werden. Trotz toleranzbehafteten Abmessungen der Struktur 8 wird der Zwischenraum zwischen der Struktur 8 und dem ersten Längsträger 12 folglich ausgefüllt. Dies ist in Fig. 2 in dem rechten Spantfeld 44 dargestellt.

Der erste Längsträger 12 kann aus mehreren ersten Längsträgern 12 gebildet sein, die jeweils über Verbinder 48 miteinander stirnseitig verbunden sind. Die Verbinder 48 können als Gelenkverbinder ausgebildet sein, die ein Befestigungselement 50 aufweisen oder tragen, mit denen die inneren Enden 24 der Tragelemente 20 verbindbar sind.

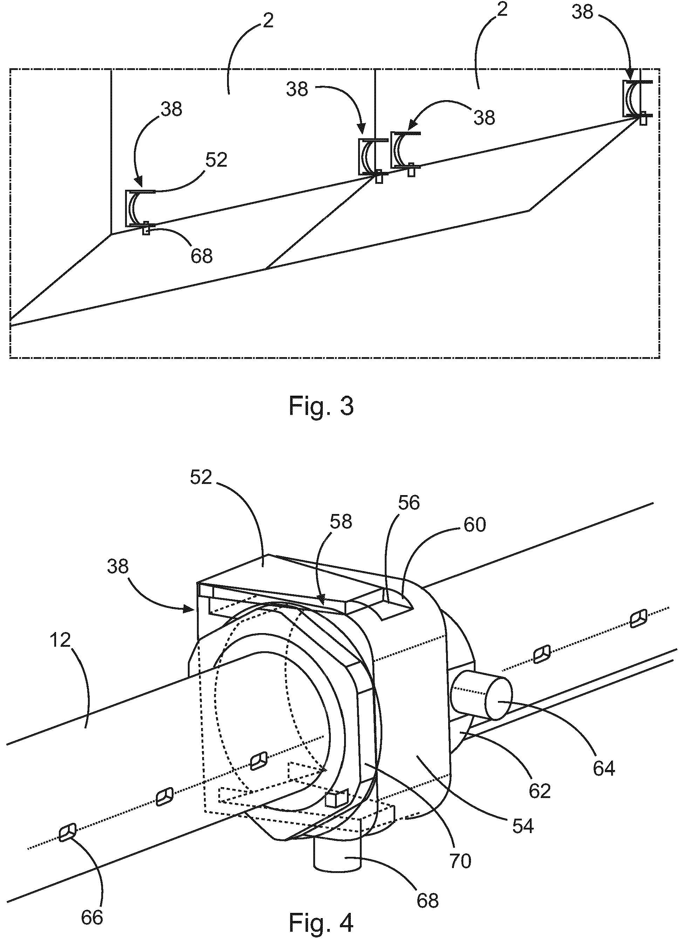

Fig. 3 zeigt eine Rückseite zweier nebeneinander angeordneter Komponenten 2. Diese können in einer Reihe mit einer Vielzahl von derartigen Komponenten 2 vorgesehen sein, die beispielsweise eine Anordnung mehrerer Über-Kopf-Staufächer oberhalb von Passagiersitzen ausbilden. Jede Komponente 2 weist an ihrer Unterseite zwei der in Fig. 1 gezeigten ersten Komponentenhalter 38 auf. Der erste Komponentenhalter 38 besitzt beispielhaft zwei Halteschenkel 52, welche sich von der Komponente 2 nach außen erstrecken. Die Halteschenkel 52 sind dazu ausgebildet, jeweils eine Außenhülse 54 aus Fig. 4 zu umgreifen, sodass sie dort jeweils in eine umfangsseitig angeordnete Nut 56 eingreifen. Die Halteschenkel 52 sind vorzugsweise mit einer sich nach außen, d.h. von der Komponente 2 weg gerichtet, verjüngenden Form ausgebildet.

Jeder Halteschenkel 52 kann eine oder mehrere Kontaktflächen 58 aufweisen. Die Kontaktfläche 58 ist so angeordnet, dass beim Einstecken des ersten Komponentenhalters 38 die Kontaktfläche 58 einen Seitenwandbereich 60 der zugehörigen Nut 56 erfassen kann. Folglich wird der Komponentenhalter 38 entlang der Axialrichtung des ersten Längsträgers 12 mit Hilfe der Außenhülse 54 an dem ersten Längsträger 12 ausgerichtet bzw. zentriert. Analog gilt dies selbstverständlich auch für den zweiten Längsträger 30 sowie die zweiten Komponentenhalter 39.

Die Außenhülse 54 ist über eine mit ihr verbindbare Innenhülse 62 mit dem ersten Längsträger 12 fixiert. Hierzu kann die Innenhülse 62 ein Fixierelement 64 aufweisen, das mit beispielhaft äquidistant angeordneten Rastvertiefungen 66 an dem ersten Längsträger 12 eine formschlüssige Verbindung eingehen kann. Das Fixierelement 64 kann etwa ein Raststift oder ein anderes, längliches Element sein. Ein Verbindungselement 68 in Form eines Raststifts, eines Bolzens oder eines anderen Verbinders verbindet indes die Innenhülse 62 mit der Außenhülse 54 bzw. dem Komponentenhalter 2.

Ein Arretierungselement 70, das etwa als Gewindemutter ausgebildet ist, kann eine Bewegung der Außenhülse 54 entlang der Haupterstreckungsrichtung des ersten Längsträgers 12 sperren, sodass sich die Außenhülse 54 in dieser Richtung nicht von der Innenhülse 62 lösen kann, während das Arretierungselement 70 jedoch eine Drehbewegung der Außenhülse 54 relativ zu der Innenhülse 62 erlaubt.

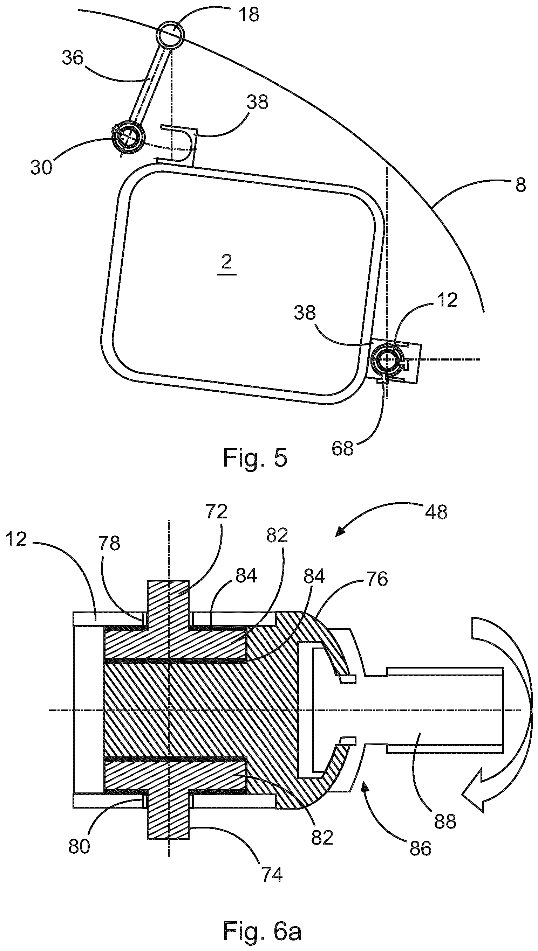

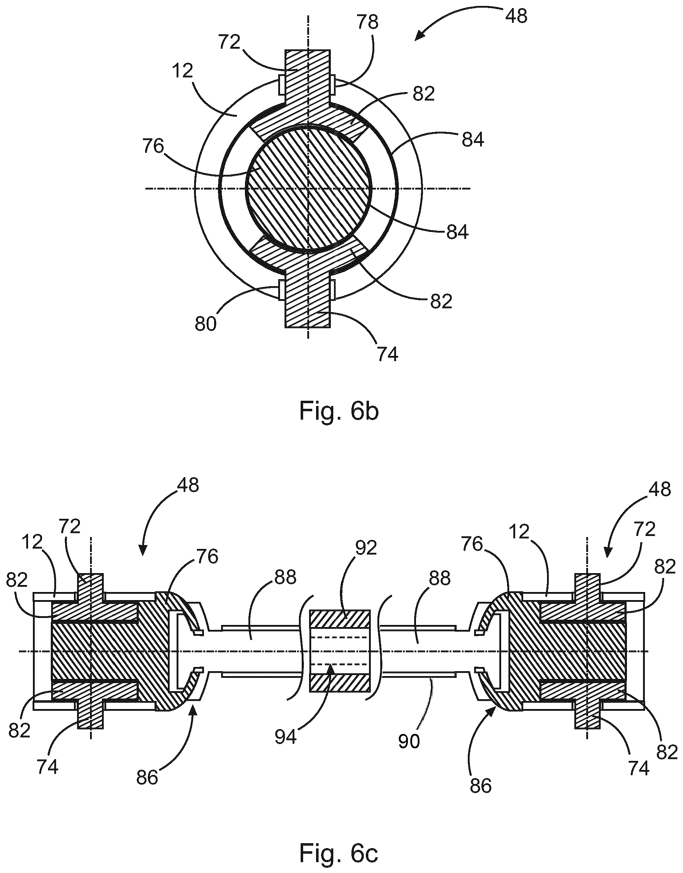

Fig. 6a bis 6c zeigen den Gelenkverbinder 48 in mehreren Darstellungen. In Fig. 6a weist der Gelenkverbinder 48 zwei Verbindungselemente 72 und 74 auf, die durch radiale Öffnungen 78 und 80 des ersten Längsträgers 12 an dessen Stirnseite geführt und radial innen von einem Adapterelement 76 fixiert sind. Die Verbindungselemente 72 und 74 werden durch Schultern 82 vor dem Herausfallen aus den radialen Öffnungen 78 und 80 gehindert und sind beispielhaft derart dimensioniert, dass sie durch eine stirnseitige Öffnung in den ersten Längsträger 12 einführbar sind. Zwischen den Verbindungselementen 72, 74 und einer Innenfläche des Längsträgers 12 sowie zwischen den Verbindungselementen 72, 74 und dem Adapterelement 76 kann jeweils ein Ausgleichselement 84 angeordnet sein, welches eine Verspannung der Verbindungselemente 72, 74 und des Adapterelements 76 an dem ersten Längsträger 12 erlaubt, gleichzeitig Vibrationen dämpft und dem Korrosionsschutz dient.

Das Adapterelement 76 weist einen Schnittstellenbereich 86 auf, der zum drehbaren Befestigen eines Stabelements 88 ausgebildet ist. Das Stabelement 88 ist mit einer ersten Verzahnung 90 ausgestattet, die ausschließlich auf zwei einander gegenüberliegenden Längsseiten des Stabelements 88 angeordnet ist. Ein in Fig. 6c gezeigter Hülsenverbinder 92 ist mit einer korrespondierenden zweiten Verzahnung 94 ausgestattet. Das Stabelement 88 kann in einer ersten Relativposition des Stabelements 88 und des Hülsenverbinders 92 ungehindert in diesen hineingesteckt werden. Durch ein Verdrehen des Hülsenverbinders 92 um 90° erfolgt ein Eingriff der beiden Verzahnungen 90 und 94, sodass die beiden Elemente axial aneinander fixiert sind. Auf diese Weise können mehrere erste Längsträger 12 sowie analog hierzu auch mehrere zweite Längsträger 30 miteinander verbunden werden. Quer zu den Längsträgern 12 bzw. 30 können die Verbindungselemente 72 und 74 die Tragelemente 20 aufnehmen. Aufgrund der einfachen Verbindung mit einstellbarer axialer Position durch die Verzahnungen 90 und 94 kann unmittelbar ein Toleranzausgleich erfolgen, indem die Längsträger 12 und 30 bzw. die Gelenkverbinder 48 passend positioniert und durch Verdrehen des Hülsenverbinders 92 fixiert werden.

Weiterhin ist ein solcher Gelenkverbinder auch ohne Verbindungselemente 72 und 74 zum Anpassen einer Länge eines Tragelements einsetzbar. Es sei weiterhin erwähnt, dass zum Fixieren von eingestellten Positionen der Eingriff der Verzahnungen 90 und 94 durch Sicherungselemente gesichert werden kann.

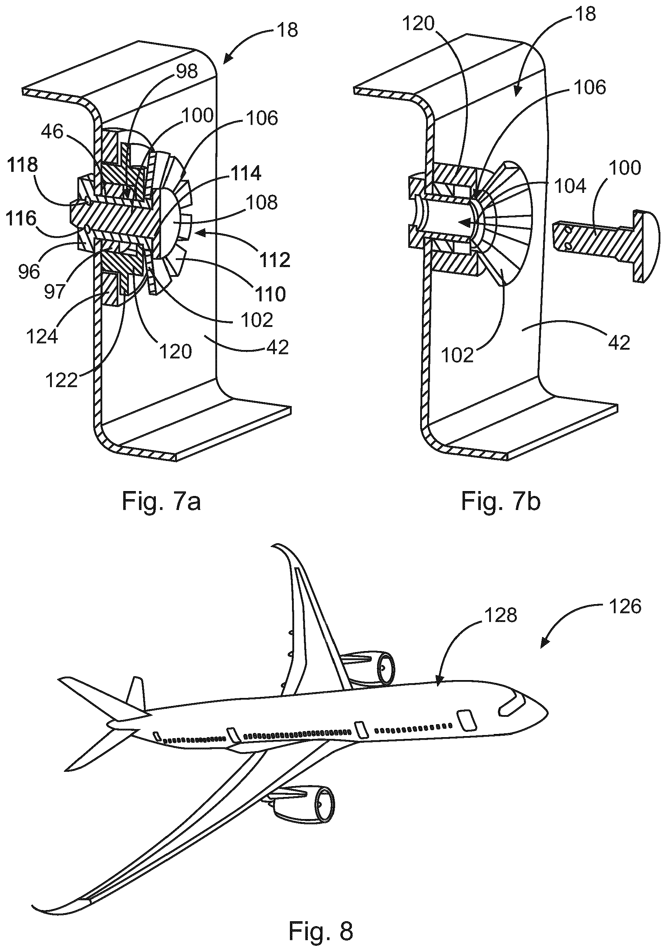

Fig. 7a und 7b offenbaren einen Strukturverbinder 18 in einer exemplarischen Ausführungsform. Der Strukturverbinder 18 weist beispielhaft ein an einem Spant 42 anbringbares erstes Befestigungselement 96 auf, das einen Basisabschnitt 98 zum Durchstecken durch die Bohrung 46 aufweist. Das erste Befestigungselement 96 ist durch eine Mutter 97 sicherbar. Der Strukturverbinder 18 weist ferner ein zweites Befestigungselement 100 und ein plastisch verformbares Trichterelement 102 auf, wobei das Trichterelement 102 eine trichterförmige Grundform mit einer Trichteröffnung 104 aufweist. Das zweite Befestigungselement 100 ist durch die Trichteröffnung 104 in eine Aufnahmeöffnung 106 des Basisabschnitts 98 einbringbar und dort befestigbar. Es weist einen von der Aufnahmeöffnung 106 abgewandten Kragen 108 auf, der größer als die Trichteröffnung 104 ist. Das Trichterelement 102 ist dazu ausgebildet, beim Befestigen des zweiten Befestigungselements 100 durch den Kragen 108 des zweiten Befestigungselements 104 von der trichterförmigen Grundform in eine flache, scheibenförmige Endform verformt zu werden. Das Trichterelement 102 kann zum Gewährleisten der Verformung mehrere in Umfangsrichtung verteilte Segmente 110 aufweisen, die jeweils ein radial außenliegendes freies Ende 112 und ein radial innenliegendes festes Ende 114 besitzen.

Das erste Befestigungselement 96 in der Aufnahmeöffnung 106 weist beispielhaft eine umlaufende Nut 116 auf. Das zweite Befestigungselement 100 umfasst exemplarisch einen Kugelsperrbolzen mit radial bewegbaren Sperrkugeln 118, die im eingesteckten Zustand des zweiten Befestigungselements 100 in der Aufnahmeöffnung 106 in die Nut 116 ragen. Ein Abstandshalter 120 umfasst einen radialen Vorsprung 122, der ein Isolierelement 124 einklemmt. Mit dem Trichterelement 102 kann dadurch eine formschlüssige Verbindung für das Isolierelement 124 erreicht werden, was zu einer thermischen Entkopplung sowie einer möglichen Doppelfunktion für den Strukturverbinder 18 führt.

Fig. 8 zeigt schließlich ein Flugzeug 126, welches einen Rumpf 128 aufweist, der durch die Struktur 8 gebildet ist und die Kabine 6 umschließt. Darin können mehrere Komponenten 2 mittels des Befestigungssystems 4 angeordnet sein.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHEN

- 2: Komponente
- 4: Befestigungssystem
- 6: Kabine
- 8: Struktur
- 10: Flugzeug
- 12: erster Längsträger
- 14: erstes Paar
- 16: zweites Paar
- 18: Strukturverbinder
- 20: Tragelement
- 22: äußeres Ende
- 24: inneres Ende
- 26: erste Tragebene
- 28: zweite Tragebene
- 30: zweiter Längsträger
- 32: drittes Paar
- 34: dritte Tragebene
- 36: Halter
- 38: erster Komponentenhalter
- 39: zweiter Komponentenhalter
- 40: Montagegestell
- 42: Spant
- 44: Spantfeld
- 46: Bohrung
- 48: Gelenkverbinder
- 50: Befestigungselement
- 52: Halteschenkel
- 54: Außenhülse

- 56: Nut
- 58: Kontaktfläche
- 60: Seitenwandbereich
- 62: Innenhülse
- 64: Fixierelement
- 66: Rastvertiefung
- 68: Verbindungselement
- 70: Arretierungselement
- 72: Verbindungselement
- 74: Verbindungselement
- 76: Adapterelement
- 78: radiale Öffnung
- 80: radiale Öffnung
- 82: Schulter
- 84: Ausgleichselement
- 86: Schnittstellenbereich
- 88: Stabelement
- 90: erste Verzahnung
- 92: Hülsenverbinder
- 94: zweite Verzahnung
- 96: erstes Befestigungselement
- 97: Mutter
- 98: Basisabschnitt
- 100: zweites Befestigungselement
- 102: Trichterelement
- 104: Trichteröffnung
- 106: Aufnahmeöffnung
- 108: Kragen
- 110: Segment
- 112: freies Ende

- 114: festes Ende
- 116: Nut
- 118: Sperrkugel
- 120: Abstandshalter
- 122: Vorsprung
- 124: Isolierelement
- 126: Flugzeug
- 128: Rumpf

- x: Längsachse
- y: Querachse
- z: Hochachse

## Patentansprüche

1. Befestigungssystem (4) zum Befestigen einer Komponente (2) in einer Kabine (6), welche in einer Struktur (8) eines Verkehrsmittels (10, 126) ausgebildet ist, aufweisend:
- mindestens einen ersten Längsträger (12) zur Anordnung in einer Längsrichtung der Kabine (6),
- mindestens zwei Paare zweier Tragelemente (20), und
- mehrere Strukturverbinder (18),
wobei die Paare (14, 16, 32) der Tragelemente (20) derart mit dem mindestens einen ersten Längsträger und der Struktur (8) verbindbar sind, dass sie dreiecksförmig zwischen dem mindestens einen ersten Längsträger (12) und der Struktur (8) verlaufen, wobei dabei zwei Enden (22, 24) der Tragelemente (20) jedes Paars (14, 16, 32) voneinander beabstandet sind und die Tragelemente (20) von diesen Enden (22, 24) aus zusammenlaufen,
wobei der mindestens eine erste Längsträger (12) mindestens ein Befestigungselement (50) zum Verbinden jeweils mindestens eines Tragelements (20) mit dem mindestens einen ersten Längsträger (12) aufweist,
wobei die Tragelemente (20) jedes Paars (14, 16, 32) mittels mindestens eines der Strukturverbinder (18) mit der Struktur (8) verbindbar sind,
wobei die Tragelemente (20) des jeweiligen Paares (14, 16, 32) derart zwischen dem mindestens einen ersten Längsträger (12) und der Struktur (8) verlaufen, dass sich eine Dreiecksform von einem oder zwei Strukturverbindern (18) zu zwei bzw. einem Befestigungselement (50) erstreckt, **dadurch gekennzeichnet, dass**
das mindestens eine Befestigungselement (50) an dem mindestens einen ersten Längsträger (12) an einer justierbaren Befestigungsposition angeordnet ist, sodass das betreffende Paar (14, 16, 32) zweier Tragelemente (20) eine justierbare Dreiecksform einnehmen kann, um einen zwischen dem betreffenden ersten Längsträger (12) und der Struktur (8) gebildeten, toleranzbehafteten Zwischenraum genau zu überbrücken.

2. Befestigungssystem (4) nach Anspruch 1,
wobei die mindestens zwei Paare (14, 16, 32) zweier Tragelemente (20) jeweils eine Tragebene (26, 28, 34) aufspannen, und
wobei ein Winkel zwischen der Tragebene (26, 28, 34) eines ersten Paares (14) und eines zweiten Paares (16) mindestens 45° beträgt.

3. Befestigungssystem (4) nach Anspruch 1 oder 2,
wobei mindestens ein erster Komponentenhalter (38) vorgesehen ist, der mit dem mindestens einen ersten Längsträger (12) und der zu befestigenden Komponente (2) verbindbar ist.

4. Befestigungssystem (4) nach einem der vorhergehenden Ansprüche,
ferner aufweisend mindestens einen zweiten Längsträger (30), der parallel zu dem ersten Längsträger (12) positionierbar ist, und
ferner aufweisend ein drittes Paar (32) zweier Tragelemente (20), die dreiecksförmig zwischen dem mindestens einen zweiten Längsträger (30) und der Struktur (8) verlaufen.

5. Befestigungssystem (4) nach Anspruch 3 und 4,
wobei das dritte Paar (32) von Tragelementen (20) eine dritte Tragebene (34) aufspannt, die einen Winkel mit der Tragebene (28) des zweiten Paares (16) von mindestens 45° einschließt.

6. Befestigungssystem (4) nach Anspruch 4 oder 5,
wobei der mindestens eine zweite Längsträger (30) über mit der Struktur (8) verbindbare Halter (36) schwenkbar an der Struktur (8) positionierbar ist, sodass er in eine von der zu befestigenden Komponente (2) beabstandete Position und in eine zu der zu befestigenden Komponente (2) gewandte Position bringbar ist,
ferner aufweisend zweite Komponentenhalter (39), die mit dem mindestens einen zweiten Längsträger (30) und der zu befestigenden Komponente (2) verbindbar sind.

7. Befestigungssystem (4) nach einem der vorhergehenden Ansprüche,
wobei jedes Paar (14, 16, 32) von Tragelementen (20) ein Tragelement (20) mit einer justierbaren Länge und ein Tragelement (20) mit einer festen Länge aufweist.

8. Befestigungssystem (4) nach Anspruch 7,
wobei das Tragelement (20) mit der festen Länge an einem ersten Befestigungselement (50) an dem betreffenden Längsträger (12, 30) an einer justierbaren Befestigungsposition angeordnet ist.

9. Befestigungssystem (4) nach einem der vorhergehenden Ansprüche,
wobei der mindestens eine erste Längsträger (12) mehrere erste Längsträger (12) aufweist, die stirnseitig durch einen Gelenkverbinder (48) verbunden sind, und
wobei der Gelenkverbinder (48) das Befestigungselement (50) aufweist und dazu ausgebildet ist, durch eine lösbare Verzahnung eine variable, festlegbare Position an zueinander gewandten Stirnseiten der ersten Längsträger (12) einzunehmen.

10. Kabine (6) eines Verkehrsmittels (10, 126), aufweisend mindestens ein Befestigungssystem (4) nach einem der vorhergehenden Ansprüche, sowie mindestens eine daran angeordnete Komponente (2).

11. Verkehrsmittel (10, 126), aufweisend eine Kabine (6) nach Anspruch 10.

12. Verkehrsmittel (10, 126) nach Anspruch 11, wobei das Verkehrsmittel (10, 126) ein Verkehrsflugzeug mit einem Rumpf ist, in dem die Kabine (6) angeordnet ist.

13. Befestigungsverfahren zum Befestigen einer Komponente (2) in einer Kabine (6), welche in einer Struktur (8) eines Verkehrsmittels ausgebildet ist, aufweisend
- Anordnen mindestens eines ersten Längsträgers (12) in einer Längsrichtung der Kabine (6),
- Anordnen mindestens zweier Paare (14, 16, 32) zweier Tragelemente (20) in einem Zwischenraum zwischen der Struktur (8) und dem mindestens einen ersten Längsträger (12) jeweils in einer Dreiecksform, wobei der erste Längsträger (12) mindestens ein erstes Befestigungselement (50) zum Verbinden jeweils mindestens eines Tragelementes (20) mit dem mindestens einen ersten Längsträger (12) aufweist,
- Anpassen der Dreiecksform durch Justieren der Befestigungsposition des mindestens einen ersten Befestigungselements (50) an dem mindestens einen ersten Längsträger (12), um den zwischen dem betreffenden Längsträger (12, 30) und der Struktur (8) gebildeten, toleranzbehafteten Zwischenraum genau zu überbrücken, und
- Befestigen der Paare (14, 16, 32) der Tragelemente (20) an Strukturverbindern (18) und dem mindestens einen ersten Längsträger (12), wobei sich die jeweilige Dreiecksform von einem oder zwei Strukturverbindern (18) zu zwei bzw. einem ersten Befestigungselement (50) des mindestens einen ersten Längsträgers (12) erstreckt.

14. Befestigungsverfahren nach Anspruch 13, ferner aufweisend
- Anordnen mindestens eines zweiten Längsträgers (30) in einer Längsrichtung der Kabine (6) in einem Abstand zu dem mindestens einen zweiten Längsträger (30),
- Anordnen mindestens eines dritten Paars (32) zweier Tragelemente (20) in einem Zwischenraum zwischen der Struktur (6) und dem mindestens einen zweiten Längsträger (30) jeweils in einer Dreiecksform,
- Anpassen der Dreiecksform durch Justieren einer Länge mindestens eines der Tragelemente (20) des dritten Paars (32) und/oder der Befestigungsposition mindestens eines ersten Befestigungselements (50) an dem mindestens einen zweiten Längsträger (30), um den zwischen dem betreffenden Längsträger (12, 30) und der Struktur (8) gebildeten, toleranzbehafteten Zwischenraum genau zu überbrücken, und
- Befestigen des dritten Paars (32) der Tragelemente (20) an Strukturverbindern (18) und dem mindestens einen zweiten Längsträger (30).

15. Befestigungsverfahren nach Anspruch 14, ferner aufweisend
- Schwenkbares Anordnen von Haltern (36) an der Struktur (8) als vorbereitenden Schritt,
- Anbinden des mindestens einen zweiten Längsträgers (30) an den Haltern (36),
- Befestigen der Komponente (2) an dem mindestens einen ersten Längsträger (12),
- Ausrichten der Komponente (2),
- Verschwenken der Halter (36), sodass der mindestens eine zweite Längsträger (30) an der Komponente (2) ausgerichtet ist,
- Verbinden der Komponente (2) mit dem mindestens einen zweiten Längsträger (30), und
- Befestigen des dritten Paars (32) der Tragelemente (20) an Strukturverbindern (18) und dem mindestens einen zweiten Längsträger (30).

## Claims

1. Fastening system (4) for fastening a component (2) in a cabin (6) which is formed in a structure (8) of a vehicle (10, 126), comprising:
- at least one first longitudinal support (12) for arrangement in a longitudinal direction of the cabin (6),
- at least two pairs of two support elements (20), and
- a plurality of structure connectors (18),
wherein the pairs (14, 16, 32) of the support elements (20) are connectable to the at least one first longitudinal support and the structure (8) such that they extend in a triangular fashion between the at least one first longitudinal support (12) and the structure (8) , wherein two ends (22, 24) of the support elements (20) of each pair (14, 16, 32) are spaced apart from one another and the support elements (20) converge from these ends (22, 24), wherein the at least one first longitudinal support (12) comprises at least one fastening element (50) for connecting at least one support element (20) to the at least one first longitudinal support (12) in each case, wherein the support elements (20) of each pair (14, 16, 32) are connectable to the structure (8) by means of at least one of the structure connectors (18), wherein the support elements (20) of the respective pair (14, 16, 32) extend between the at least one first longitudinal support (12) and the structure (8) such that a triangular shape extends from one or two structure connectors (18) to two or one fastening element (50), respectively, **characterized in that** the at least one fastening element (50) is arranged on the at least one first longitudinal support (12) at an adjustable fastening position , such that the respective pair (14, 16, 32) of two support elements (20) can assume an adjustable triangular shape in order to precisely bridge a tolerance-afflicted gap formed between the respective first longitudinal support (12) and the structure (8).

2. Fastening system (4) according to Claim 1, wherein the at least two pairs (14, 16, 32) of two support elements (20) each span a support plane (26, 28, 34), and wherein an angle between the support plane (26, 28, 34) of a first pair (14) and a second pair (16) is at least 45°.

3. Fastening system (4) according to Claim 1 or 2, wherein at least one first component holder (38) is provided, which is connectable to the at least one first longitudinal support (12) and the component (2) to be fastened.

4. Fastening system (4) according to one of the preceding claims, further comprising at least one second longitudinal support (30), which is positionable parallel to the first longitudinal support (12), and further comprising a third pair (32) of two support elements (20) which extend in a triangular fashion between the at least one second longitudinal support (30) and the structure (8).

5. Fastening system (4) according to Claims 3 and 4, wherein the third pair (32) of support elements (20) spans a third support plane (34) which encloses an angle of at least 45° with the support plane (28) of the second pair (16).

6. Fastening system (4) according to Claim 4 or 5, wherein the at least one second longitudinal support (30) is positionable pivotably on the structure (8) via holders (36) connectable to the structure (8) , such that it can be brought into a position spaced apart from the component (2) to be fastened and into a position facing the component (2) to be fastened, further comprising second component holders (39), which are connectable to the at least one second longitudinal support (30) and the component (2) to be fastened.

7. Fastening system (4) according to one of the preceding claims, wherein each pair (14, 16, 32) of support elements (20) comprises a support element (20) with an adjustable length and a support element (20) with a fixed length.

8. Fastening system (4) according to Claim 7, wherein the support element (20) with the fixed length is arranged at a first fastening element (50) on the respective longitudinal support (12, 30) at an adjustable fastening position.

9. Fastening system (4) according to one of the preceding claims, wherein the at least one first longitudinal support (12) comprises a plurality of first longitudinal supports (12) which are connected end-to-end by an articulated connector (48), and wherein the articulated connector (48) comprises the fastening element (50) and is designed to assume a variable, fixable position at end faces of the first longitudinal supports (12) facing one another by means of a detachable serration.

10. Cabin (6) of a vehicle (10, 126), comprising at least one fastening system (4) according to one of the preceding claims, as well as at least one component (2) arranged thereon.

11. Vehicle (10, 126), comprising a cabin (6) according to Claim 10.

12. Vehicle (10, 126) according to Claim 11, wherein the vehicle (10, 126) is an airliner with a fuselage in which the cabin (6) is arranged.

13. Fastening method for fastening a component (2) in a cabin (6) which is formed in a structure (8) of a vehicle, comprising:
- arranging at least one first longitudinal support (12) in a longitudinal direction of the cabin (6),
- arranging at least two pairs (14, 16, 32) of two support elements (20) in a gap between the structure (8) and the at least one first longitudinal support (12) in a triangular shape in each case, wherein the first longitudinal support (12) comprises at least one first fastening element (50) for connecting at least one support element (20) to the at least one first longitudinal support (12) in each case,
- adjusting the triangular shape by adjusting the fastening position of the at least one first fastening element (50) on the at least one first longitudinal support (12) in order to precisely bridge the tolerance-afflicted gap formed between the respective longitudinal support (12, 30) and the structure (8), and
- fastening the pairs (14, 16, 32) of the support elements (20) to structure connectors (18) and the at least one first longitudinal support (12) , wherein the respective triangular shape extends from one or two structure connectors (18) to two or one first fastening element (50) of the at least one first longitudinal support (12), respectively.

14. Fastening method according to Claim 13, further comprising:
- arranging at least one second longitudinal support (30) in a longitudinal direction of the cabin (6) at a distance from the at least one second longitudinal support (30),
- arranging at least one third pair (32) of two support elements (20) in a gap between the structure (6) and the at least one second longitudinal support (30) in a triangular shape in each case,
- adjusting the triangular shape by adjusting a length of at least one of the support elements (20) of the third pair (32) and/or the fastening position of at least one first fastening element (50) on the at least one second longitudinal support (30) in order to precisely bridge the tolerance-afflicted gap formed between the respective longitudinal support (12, 30) and the structure (8), and
- fastening the third pair (32) of the support elements (20) to structure connectors (18) and the at least one second longitudinal support (30).

15. Fastening method according to Claim 14, further comprising:
- pivotably arranging holders (36) on the structure (8) as a preparatory step,
- connecting the at least one second longitudinal support (30) to the holders (36),
- fastening the component (2) to the at least one first longitudinal support (12),
- aligning the component (2),
- pivoting the holders (36) such that the at least one second longitudinal support (30) is aligned with the component (2),
- connecting the component (2) to the at least one second longitudinal support (30), and
- fastening the third pair (32) of the support elements (20) to structure connectors (18) and the at least one second longitudinal support (30).

## Revendications

1. Système de fixation (4) pour la fixation d'un composant (2) dans une cabine (6) qui est formée dans une structure (8) d'un véhicule de transport (10, 126), comprenant:
- au moins un premier longeron (12) destiné à être agencé dans une direction longitudinale de la cabine (6),
- au moins deux paires de deux éléments de support (20), et
- plusieurs connecteurs de structure (18),
dans lequel les paires (14, 16, 32) des éléments de support (20) peuvent être raccordées audit au moins un premier longeron et à la structure (8) de manière à s'étendre en forme de triangle entre ledit au moins un premier longeron (12) et la structure (8) , deux extrémités (22, 24) des éléments de support (20) de chaque paire (14, 16, 32) étant espacées l'une de l'autre et les éléments de support (20) convergeant à partir de ces extrémités (22, 24), dans lequel ledit au moins un premier longeron (12) comprend au moins un élément de fixation (50) pour raccorder au moins un élément de support (20) audit au moins un premier longeron (12) dans chaque cas, dans lequel les éléments de support (20) de chaque paire (14, 16, 32) peuvent être raccordés à la structure (8) au moyen d'au moins un des connecteurs de structure (18), dans lequel les éléments de support (20) de la paire (14, 16, 32) respective s'étendent entre ledit au moins un premier longeron (12) et la structure (8) de telle sorte qu'une forme triangulaire s'étend à partir d'un ou de deux connecteurs de structure (18) jusqu'à deux ou un élément de fixation (50), respectivement,
**caractérisé en ce que** ledit au moins un élément de fixation (50) est agencé sur ledit au moins un premier longeron (12) à une position de fixation ajustable , de sorte que la paire (14, 16, 32) respective des deux éléments de support (20) peut prendre une forme triangulaire ajustable afin de combler précisément un espace intermédiaire affecté par des tolérances formé entre le premier longeron (12) respectif et la structure (8).

2. Système de fixation (4) selon la revendication 1, dans lequel lesdites au moins deux paires (14, 16, 32) de deux éléments de support (20) définissent chacune un plan de support (26, 28, 34), et dans lequel un angle entre le plan de support (26, 28, 34) d'une première paire (14) et d'une deuxième paire (16) est d'au moins 45°.

3. Système de fixation (4) selon la revendication 1 ou 2, dans lequel au moins un premier support de composant (38) est prévu, lequel peut être raccordé audit au moins un premier longeron (12) et au composant (2) à fixer.

4. Système de fixation (4) selon l'une quelconque des revendications précédentes, comprenant en outre au moins un deuxième longeron (30), qui peut être positionné parallèlement au premier longeron (12), et comprenant en outre une troisième paire (32) de deux éléments de support (20) qui s'étendent en forme de triangle entre ledit au moins un deuxième longeron (30) et la structure (8).

5. Système de fixation (4) selon les revendications 3 et 4, dans lequel la troisième paire (32) d'éléments de support (20) définit un troisième plan de support (34) qui forme un angle d'au moins 45° avec le plan de support (28) de la deuxième paire (16).

6. Système de fixation (4) selon la revendication 4 ou 5, dans lequel ledit au moins un deuxième longeron (30) peut être positionné de manière pivotante sur la structure (8) via des supports (36) pouvant être raccordés à la structure (8) , de sorte qu'il peut être amené dans une position espacée du composant (2) à fixer et dans une position orientée vers le composant (2) à fixer, comprenant en outre des deuxièmes supports de composant (39), qui peuvent être raccordés audit au moins un deuxième longeron (30) et au composant (2) à fixer.

7. Système de fixation (4) selon l'une quelconque des revendications précédentes, dans lequel chaque paire (14, 16, 32) d'éléments de support (20) comprend un élément de support (20) avec une longueur ajustable et un élément de support (20) avec une longueur fixe.

8. Système de fixation (4) selon la revendication 7, dans lequel l'élément de support (20) avec la longueur fixe est agencé au niveau d'un premier élément de fixation (50) sur le longeron (12, 30) respectif à une position de fixation ajustable.

9. Système de fixation (4) selon l'une quelconque des revendications précédentes, dans lequel ledit au moins un premier longeron (12) comprend une pluralité de premiers longerons (12) qui sont raccordés bout à bout par un connecteur articulé (48), et dans lequel le connecteur articulé (48) comprend l'élément de fixation (50) et est conçu pour prendre une position variable et fixable sur les faces d'extrémité des premiers longerons (12) orientées les unes vers les autres au moyen d'une denture amovible.

10. Cabine (6) d'un véhicule de transport (10, 126), comprenant au moins un système de fixation (4) selon l'une quelconque des revendications précédentes , ainsi qu'au moins un composant (2) agencé sur celui-ci.

11. Véhicule de transport (10, 126), comprenant une cabine (6) selon la revendication 10.

12. Véhicule de transport (10, 126) selon la revendication 11 , dans lequel le véhicule de transport (10, 126) est un avion de ligne avec un fuselage dans lequel la cabine (6) est agencée.

13. Procédé de fixation pour la fixation d'un composant (2) dans une cabine (6) qui est formée dans une structure (8) d'un véhicule de transport, comprenant:
- l'agencement d'au moins un premier longeron (12) dans une direction longitudinale de la cabine (6),
- l'agencement d'au moins deux paires (14, 16, 32) de deux éléments de support (20) dans un espace intermédiaire entre la structure (8) et ledit au moins un premier longeron (12) sous une forme triangulaire dans chaque cas , ledit premier longeron (12) comprenant au moins un premier élément de fixation (50) pour raccorder au moins un élément de support (20) audit au moins un premier longeron (12) dans chaque cas,
- l'ajustement de la forme triangulaire par l'ajustement de la position de fixation dudit au moins un premier élément de fixation (50) sur ledit au moins un premier longeron (12), afin de combler précisément l'espace intermédiaire affecté par des tolérances formé entre le longeron (12, 30) respectif et la structure (8), et
- la fixation des paires (14, 16, 32) des éléments de support (20) à des connecteurs de structure (18) et audit au moins un premier longeron (12) , la forme triangulaire respective s'étendant à partir d'un ou de deux connecteurs de structure (18) jusqu'à deux ou un premier élément de fixation (50) dudit au moins un premier longeron (12), respectivement.

14. Procédé de fixation selon la revendication 13, comprenant en outre:
- l'agencement d'au moins un deuxième longeron (30) dans une direction longitudinale de la cabine (6) à une distance dudit au moins un deuxième longeron (30),
- l'agencement d'au moins une troisième paire (32) de deux éléments de support (20) dans un espace intermédiaire entre la structure (6) et ledit au moins un deuxième longeron (30) sous une forme triangulaire dans chaque cas,
- l'ajustement de la forme triangulaire par l'ajustement d'une longueur d'au moins un des éléments de support (20) de la troisième paire (32) et/ou de la position de fixation d'au moins un premier élément de fixation (50) sur ledit au moins un deuxième longeron (30), afin de combler précisément l'espace intermédiaire affecté par des tolérances formé entre le longeron (12, 30) respectif et la structure (8), et
- la fixation de la troisième paire (32) des éléments de support (20) à des connecteurs de structure (18) et audit au moins un deuxième longeron (30).

15. Procédé de fixation selon la revendication 14, comprenant en outre:
- l'agencement de manière pivotante de supports (36) sur la structure (8) en tant qu'étape préparatoire,
- le raccordement dudit au moins un deuxième longeron (30) aux supports (36),
- la fixation du composant (2) audit au moins un premier longeron (12),
- l'alignement du composant (2),
- le pivotement des supports (36) de sorte que ledit au moins un deuxième longeron (30) est aligné avec le composant (2),
- le raccordement du composant (2) audit au moins un deuxième longeron (30), et
- la fixation de la troisième paire (32) des éléments de support (20) à des connecteurs de structure (18) et audit au moins un deuxième longeron (30).
